# EUROPÄISCHE PATENTSCHRIFT

(11) **EP 1 597 485 B1**
(45) Veröffentlichungstag und Bekanntmachung des Hinweises auf die Patenterteilung: **27.06.2007**
(21) Anmeldenummer: 04714322.7
(22) Anmeldetag: 25.02.2004
(51) Int. Cl.: F16B 7/04, E04F 11/18

(54) **ROHRVERBINDER**
PIPE CONNECTION
RACCORD POUR TUYAUX

(30) Priorität: 28.02.2003 DE 20303258 U
(43) Veröffentlichungstag der Anmeldung: 23.11.2005
(73) Patentinhaber: Haboe Edelstahl-Systeme GmbH, 35285 Gemünden-Wohra (DE)
(72) Erfinder: BÖHL, Harald, 35285 Gemünden (DE)
(74) Vertreter: Olbricht, Karl Heinrich
(86) Internationale Anmeldenummer: PCT/EP2004/001854
(87) Internationale Veröffentlichungsnummer: WO 2004/076869

(56) Entgegenhaltungen:
- DE-U- 29 616 101
- GB-A- 683 386
- GB-A- 1 500 940
- US-A- 3 233 871
- US-B1- 6 203 233

## Beschreibung

Die Erfindung betrifft Rohrverbinder gemäß dem Oberbegriff von Anspruch 1.

Herkömmliche Rohrverbindungssysteme benutzen Verbindungselemente, die einen Grundkörper mit einem Ansatz oder einer Öffnung zur formschlüssigen Aufnahme eines Rohrendes aufweisen. Sie werden vielfach bei der Montage von Geländern verwendet, die als Hilfsmittel für Bequemlichkeit und Sicherheit z.B. an Treppen, Balkonen und anderen Gebäudeteilen, aber auch als Absperrungen bei Veranstaltungen dienen.

Ein typisches Beispiel eines Inline-Systems zeigt US 3 233 871. Es besteht aus Rohrpfosten, daran befestigten Anschlußstücken und mit diesen verbundenen Rohren. Die Anschlußstücke sind Lochscheiben mit einem Umfangs-Absatz und einer konusartig rückspringenden Umfangsfläche. Sie werden jeweils mittels einer Kopfschraube am Rohrpfosten befestigt, wobei am Übergang zu den Rohren stets eine Stoßlinie mit erkennbarer Fixierschraube zu sehen ist. Ästhetisch ist das so entstehende Erscheinungsbild nicht befriedigend, manchmal sogar störend. Auch technisch sind die unvermeidlichen Spalte nachteilig, da im Langzeitgebrauch eine Qualitätsminderung nicht auszuschließen ist. Staub und Feuchtigkeit können in jede Stoßfuge allmählich eindringen, aber kaum beseitigt werden, da die Reinigung mühsam oder ohne Demontage überhaupt unmöglich ist. Ungünstig sind ferner fertigungsseitig unveränderlich vorgegebene Winkel, denn in zahlreichen Anwendungsfällen trifft man vor Ort Verhältnisse an, die dazu zwingen, den Rohrverlauf beispielsweise an existente Treppen, an variable Neigungen eines Grundstücks usw. anzupassen. Das ist mit bisherigen Systemen nur durch aufwendige Einzelarbeit zu schaffen, was überdies den Einsatz von Sonderwerkzeugen erfordern kann, die nicht immer und überall verfügbar sind.

Ähnliches gilt für ein in DE 89 05 325 U1 beschriebenes Verbindungselement, das an einem Grundkörper von L- oder T-Form mindestens einen Zapfenarm mit Dichtungsringen hat, der in das Ende eines Rohrabschnitts einführbar ist. Zur Verschraubung ist jeder Zapfenarm an seinem freien Ende geschlitzt und mit einer axialen Ausnehmung versehen, in die ein Kippteil eingesetzt wird. Übt man daran radial mit einer Spannschraube Druck auf den Zapfen aus, so spreizen sich seine Schlitzteile und verklemmen das aufgebrachte Rohrende. Auch hierbei bleibt der Rohrstoß sichtbar; diese Fuge ermöglicht das Eindringen von Feuchtigkeit und Schmutz. Das kann auch an einer prinzipiell unverdeckten Flachabsenkung des Verbindungselements stattfinden, die zudem das Aussehen an jeder Verbindungsstelle beeinträchtigt. Weil bloß rechtwinklige Abzweigungen vorgesehen sind, ist eine Winkeleinstellung nicht möglich.

Dies trifft auch für eine Rohrverbindung gemäß DE 93 05 823 U1 zu. Sie hat ein rohrförmiges Verbindungselement zur Aufnahme zweier symmetrisch angeordneter Anker, die als Balken mit Spreiz-Ecken ausgebildet sind. Werden sie durch eine mittig angreifende Spannschraube auseinander gedrückt, so verklemmen sich die Spreiz-Ecken an der Innenwandung von aufgesteckten Rohrabschnitten. Wiederum sind die Stoßfugen sowie der Spannschraubenkopf stets sichtbar, was das Erscheinungsbild der Verbindung beeinträchtigt. Diese ist zudem auf geradlinige Rohrkupplungen beschränkt, also auf lineare Verlängerungen ohne Abzweig- oder Anstellwinkel.

Den erwähnten Konstruktionen ist gemeinsam, daß eine aufwendige Vorbearbeitung der zu verbindenden Rohre notwendig ist, etwa mit besonderen Bohrungen, und daß die Verbindungselemente äußerlich abgesetzt, bisweilen sogar auffällig gestaltet sind, etwa durch den Einsatz von größeren Kugeln. Nicht selten ist eine ebenfalls aufwendige Nachbearbeitung notwendig, z.B. ein Verschweißen mit anschließendem Versäubern der Schweißnaht durch Schleifen und Polieren. Die fabrikseitige Festlegung der allein möglichen Anstell- oder Abzweigwinkel ist aber ein Hauptmangel, der auch einem ansonsten zweckmäßigen System gemäß DE 298 03 787 U1 anhaftet.

In DE 29 04 776 A1 sind Montagemittel beschrieben, die Rohrelemente mit Anschlußenden und Kunststoff-Ummantelung an zylindrischen Stahleinlagen aufweisen. Darin sitzen zylindrische Füllstücke, die mit geraden Gelenkbolzen verschraubt und miteinander durch Gelenke mit fester Querachse verbunden sind. Deshalb müssen die Montagerohre stets in einer Ebene liegen. Nachteilig ist ferner, daß sich enge Krümmungsradien kaum verwirklichen lassen. Knie-Bogenelemente erfordern innen eine genaue Konus-Anpassung. Die Außen- und Innen-Wölbung der Elemente schränkt an sich mögliche Winkelabweichungen ein; eine gegenseitige Verdrehung benachbarter Bogenelemente um andere Winkel als 140° kommt nur bei Einsatz von Kugelgelenken in Betracht. Deren Anwendung ist jedoch nur bei Systemen mit großen Rohrdurchmessern sinnvoll, wo dafür im Inneren genügend Freiraum vorhanden ist.

Es ist Ziel der Erfindung, die Nachteile des Standes der Technik mit wirtschaftlichen Mitteln zu überwinden und einen Rohrverbinder zu schaffen, der ohne umständliche Vor- und Nacharbeit vor Ort rasch und ohne störende Übergänge eine einfache, stabile Montage erlaubt, vor allem auch mit unterschiedlichen oder veränderlichen Winkeln der zu verbindenden Rohre. Der neuartige Verbinder soll ferner gegen Feuchteeinwirkung, Schmutzablagrung usw. unempfindlich sowie bequem zu reinigen sein.

Hauptmerkmale der Erfindung sind in Anspruch 1 angegeben. Ausgestaltungen sind Gegenstand der Ansprüche 2 bis 18.

Ein Rohrverbinder mit einem Grundkörper, welcher ein zylindrisches Gehäuse ist und an dem wenigstens ein Anschlußkörper axialfest anbringbar ist, wobei an diesem und/oder an dem Grundkörper zur formschlüssigen Aufnahme eines Paßstücks oder eines Rohrendes jeweils ein Einstich oder ein Zapfen vorhanden ist, zeichnet sich erfindungsgemäß dadurch aus, daß auf dem Gehäuse ein Abdeckanschluß umfangsseitig gleitbeweglich angeordnet ist. Diese beiden Teile bilden mithin ein außerordentlich kompaktes, tragfähiges Scharnier, das beispielsweise als Türband dienen kann und mit besonderem Vorteil bei der Herstellung von Toren, Türen sowie Rahmen-Rohrkonstruktionen einsetzbar ist. Der Rohrverbinder ist ganz einfach aufgebaut und entsprechend leicht montierbar, jedoch stabil und vielfältigen Beanspruchungen zuverlässig gewachsen. Zudem erzielt man eine einheitliche, angenehme Optik.

Allgemein ist das Gehäuse ortsfest und der Abdeckanschluß demgegenüber begrenzt relativbeweglich. Dazu ist es sehr günstig, daß das Gehäuse an einem Teil seines Umfangs eine Bogennut aufweist, in die ein Bolzen eingreift, der den Abdeckanschluß am Gehäuse schwenkbar haltert und der mit einer in seinem Inneren koaxial dazu gelagerten Buchse verbunden bzw. verbindbar ist. Zum Unterschied von zahlreichen Türband-Konstruktionen schließt hierbei das bewegliche Teil nicht (ko)axial an das ortsfeste Bauteil an, sondern umfangsseitig quer zu dessen Körper. Die Baulänge kann daher kürzer sein als bei den meisten herkömmlichen Türbändern. Weil der Aufbau nur wenige Einzelelemente erfordert, ist die Herstellung überaus kostengünstig und die Wartung problemlos.

Zweckmäßig ist die Buchse im Gehäuse schwimmend gelagert, z.B. in einem Innenzylinder, in den die Buchse mit der notwendigen Minimaltoleranz eingepaßt ist. Die Buchse kann ein Radialgewindeloch haben, um mit dem Bolzenende verschraubt zu werden, so daß dieses daran fest abgestützt ist. Man kann sie ferner sehr einfach durch den axial aufsitzenden Anschlußkörper mit Bewegungsspiel sichern, z.B. unter Einsatz einer Dämpfungsfeder zwischen der Buchse und dem Anschlußkörper.

Sowohl vorteilhaftes Aussehen als auch bequeme Pflege wird dadurch maßgeblich unterstützt, daß der Abdeckanschluß in Form einer Klammer, eines Sattels o.dgl. auf dem Umfang des Gehäuses sitzt und mit ihm bündig-glatt abschließt. Der Rohrverbinder und damit die ganze an ihn anschließende Konstruktion gewinnt so nicht nur ein klares, ansprechendes Design, sondern auch eine kontinuierliche, glatte Oberfläche ohne Zwischenräume, so daß kein Schmutz eindringen kann.

Für sichere Verbindung mit weiteren Systemteilen hat der Abdeckanschluß einen vom Gehäuse wegführenden Ansatz oder Zapfenbund, auf den ein Paßstück oder ein Rohrende aufgesteckt und sodann eingeschweißt, verklebt oder auch verschraubt werden kann. Demselben Zweck dient es, wenn der Abdeckanschluß und/oder der Anschlußkörper und/oder das Gehäuse selbst ein zentrisches Sack- oder Gewindeloch hat, so daß sich weitere Bauteile bequem und paßgenau befestigen lassen. Die Montage wird dadurch stark erleichtert, daß der Anschlußkörper Ansatzflächen oder Einstecköffnungen zum formschlüssigen Angriff eines Werkzeugs aufweist, das mit geeigneten Formflächen oder Ansätzen versehen ist.

Die Bogennut kann quer zur Achse des Gehäuses verlaufen, was für kurz bemessene Scharniere zweckmäßig ist, die man bei lediglich schwenkenden Bauteilen verwendet. Soll aber z.B. ein Tor, eine Türe o.dgl. beim Öffnen angehoben werden, so benutzt man Scharniere, deren Bogennut schräg oder gekrümmt zur Achse des Gehäuses verläuft, so daß der im Gehäusemantel geführte Bolzen samt dem Abdeckanschluß beim Verschwenken ansteigt, mithin auch das davon getragene Bauelement. Eine Dämpfungsfeder im Gehäuse kann das Bauteil bei der Schließbewegung abfedern. Wahlweise oder zusätzlich kann das Gehäuse - etwa mittels einer eingefrästen Nut - eine Bremseinrichtung haltern, die bei besonders vorteilhafter Gestaltung ein Formteil aufweist, das in eine gegengleich profilierte Aussparung der Buchse greift. Für die Montage und die praktische Verwendung ist es dabei gleichermaßen vorteilhaft, daß die Funktionen Anschlag, Federung und automatisches Schließen allesamt integriert sind, ohne das gefällige Aussehen im geringsten zu beeinträchtigen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Schrägansicht eines erfindungsgemäßen Rohrverbinders,
- Fig. 2: eine auseinandergezogene Seitenansicht des Verbinders von Fig. 1,
- Fig. 3: eine Zusammenbau-Seitenansicht des Verbinders von Fig. 1 und Fig. 2,
- Fig. 4a: je eine Seitenansicht eines Grundkörpers,
- Fig. 4b: eine Axialschnittansicht entsprechend Linie IVb-IVb in Fig. 4a bzw.
- Fig. 4c: eine Querschnittansicht entsprechend Linie IVc-IVc in Fig. 4a,
- Fig. 5a: eine Seitenansicht eines Anschlußkörpers
- Fig. 5b: eine Axialschnittansicht entsprechend Linie Vb-Vb in Fig. 5a bzw.
- Fig. 5c: eine Druntersicht des Anschlußkörpers von Fig. 5a,
- Fig. 6: eine Axialschnittansicht einer Buchse,
- Fig. 7a: eine Draufsicht auf einen Abdeckanschluß,
- Fig. 7b: eine Axialschnittansicht entsprechend Linie VIIb-VIIb in Fig. 7a,
- Fig. 7c: eine Seitenansicht des Abdeckanschlusses von Fig. 7a,
- Fig. 7d: ein vergrößerter Ausschnitt entsprechend dem Kreis VIId in Fig. 7b,
- Fig. 8: eine Schrägansicht eines abgewandelten Rohrverbinders,
- Fig. 9: eine auseinandergezogene Seitenansicht des Verbinders von Fig. 8,
- Fig. 10: eine Zusammenbau-Seitenansicht des Verbinders von Fig. 8 und Fig. 9,
- Fig. 11a: je eine Seitenansicht eines abgewandelten Grundkörpers,
- Fig. 11b: eine Axialschnittansicht entsprechend Linie XIb-XIb in Fig. 11a bzw.
- Fig. 11c: eine Querschnittansicht entsprechend Linie XIc-XIc in Fig. 11a,
- Fig. 12a: eine Seitenansicht einer Buchse von abgewandelter Bauform,
- Fig. 12b: eine Axialschnittansicht entsprechend Linie XIIb-XIIb in Fig. 12a,
- Fig. 12c: eine Druntersicht der Buchse von Fig. 12a,
- Fig. 12d: eine Schrägansicht der Buchse von Fig. 12a bis Fig. 12c,
- Fig. 13a: eine Seitenansicht eines Grundkörpers noch anderer Bauform,
- Fig. 13b: eine Axialschnittansicht entsprechend Linie Xlllb-Xlllb in Fig. 13a,
- Fig. 13c: eine Querschnittansicht entsprechend Linie Xlllc-Xlllc in Fig. 13a und
- Fig. 13d: eine Schrägansicht des Grundkörpers von Fig. 13a bis Fig. 13c.

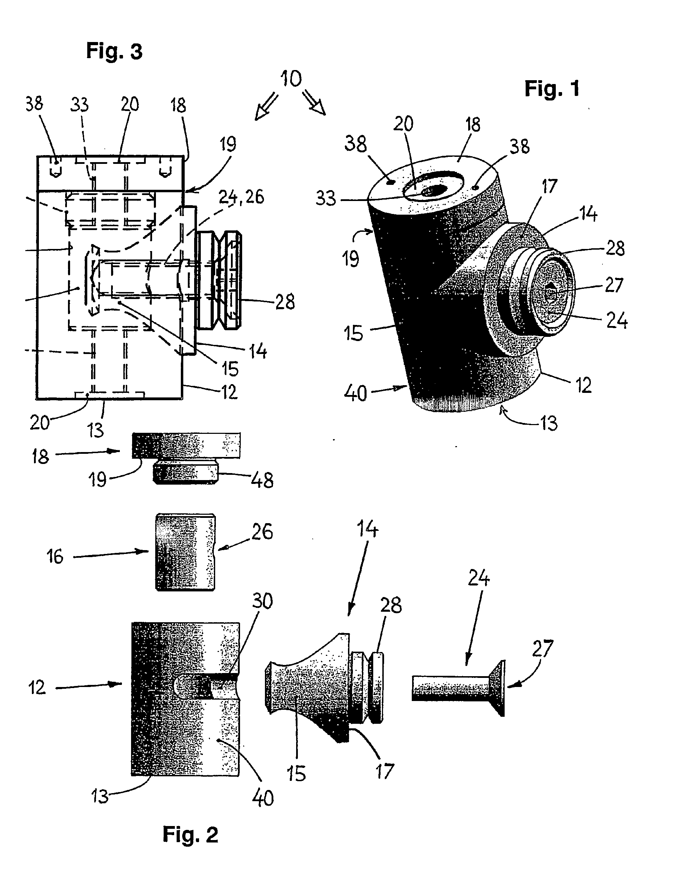

Im Ausführungsbeispiel der Fig. 1 bis Fig. 7d ist ein Rohrverbinder 10 dargestellt, der einen Grundkörper 12 in Form eines zylindrischen Gehäuses hat. Auf dessen Umfang 40 sitzt ein Abdeckanschluß 14, der den Umfang bzw. die Mantelfläche 40 des Gehäuses 12 einseitig mit Schenkeln 15 formschlüssig erfaßt. Der Abdeckanschluß 14 hat eine plane, kreisrunde Deckfläche, deren Durchmesser gleich demjenigen der Bodenfläche 13 des Grundkörpers 12 ist.

Ebenfalls durchmessergleich ist ein Anschlußkörper 18 gestaltet, der als flanschförmiger Deckel ausgebildet und mit einem Paßansatz 48 versehen ist. Dieser sowie eine plane Ringfläche 19 an der Unterseite des Deckels 18 gewährleisten satten Formschluß an bzw. in dem Grundkörper 12.

Letzterer hat einen Innenzylinder 42, der eine Buchse 16 aufnimmt, die mit axialem Bewegungsspiel von dem Paßansatz 48 des Deckels 18 abgestützt wird. Die Buchse 16 weist ein Radial-Gewindeloch 26 zur Aufnahme des Gewindeendes eines Bolzens 24 auf, der mit seinem Schaft eine Bohrung 25 im Ansatz bzw. Zapfenbund 28 durchsetzt und der am Kopf einen Innensechskant 27 haben kann.

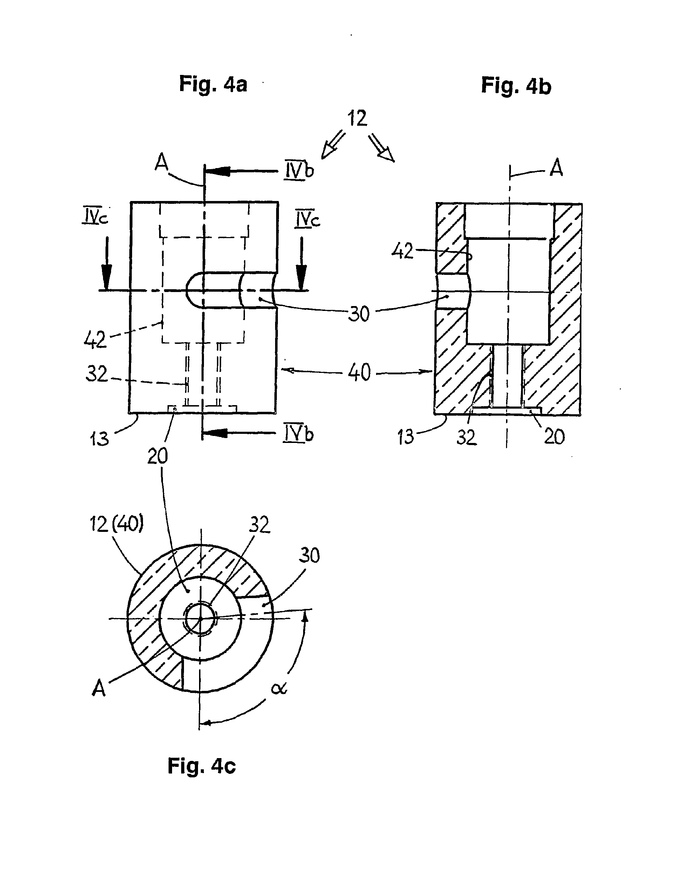

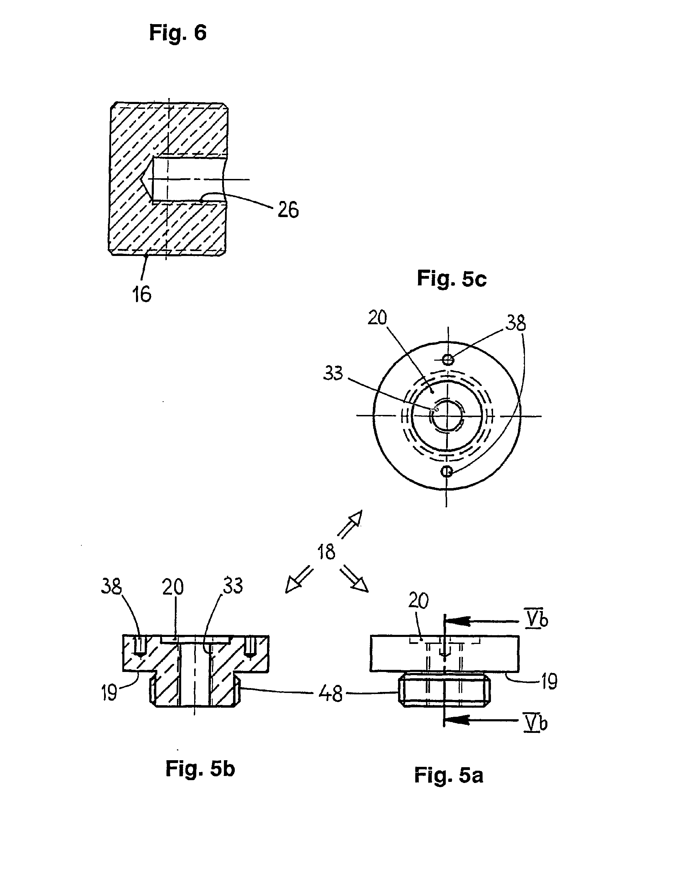

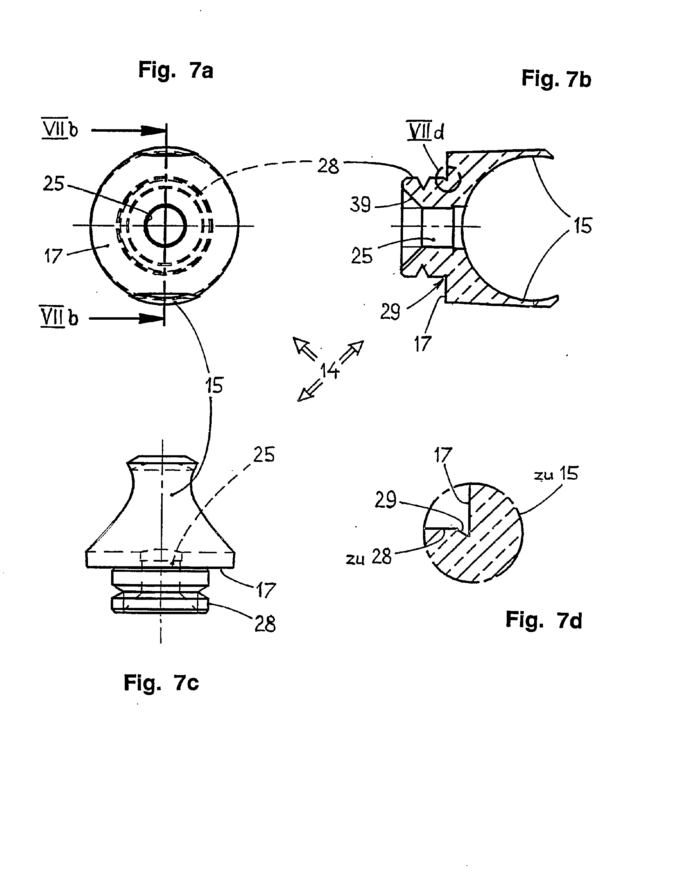

Einzelheiten des Zusammenbaues ergeben sich aus der auseinandergezogenen Seitenansicht von Fig. 2 in Verbindung mit Fig. 3 sowie der Einzeldarstellung der Bauteile 12 (Fig. 4a bis 4c), 14 (Fig. 7a bis 7d), 16 (Fig. 6) und 18 (Fig. 5a bis 5c). Insbesondere entnimmt man der Fig. 4c, daß der Bogenwinkel α der Bogennut 30 sich über mehr als 90° erstreckt, vorzugsweise bis 120°. Das Gehäuse 12 hat am Boden 13 zentrisch einen Einstich 20, der sich mit einem Gewindeloch 32 bis zum Innenzylinder 42 hin fortsetzt. Am anderen Ende des Gehäuses 12 hat der Deckel 18 ebenfalls einen zentrischen Einstich 20 und daran anschließend ein Gewindeloch 33, das auch den Paßansatz 48 durchsetzt. Die Deckfläche des Anschlußkörpers bzw. Deckels 18 weist Einstecköffnungen 38 für den Angriff eines (nicht gezeigten) Werkzeugs auf.

Der speziell in Fig. 7a bis 7d dargestellte Abdeckanschluß 14 kann (wie gezeichnet) schmale Schenkel 15 haben, die als Klammerfedern auf dem Gehäuse 12 sitzen. Für manche Anwendungen ist es zweckmäßig und vorgesehen, die Schenkel 15 breiter und mit großer Federsteife auszubilden. Als vorteilhaft erweist sich eine Hinterschneidung 29 (Fig. 7d) zwischen der Deckfläche 17 und dem Ansatzumfang (28).

Man erkennt, daß der Rohrverbinder 10 aus einem massiven Scharniergehäuse 12, einer in diese eingepaßten Schamierpatrone oder Buchse 16, einem das Gehäuse 12 seitlich übergreifenden Abdeckanschluß 14 samt einem ihn tragenden Bolzen 24 sowie einem Anschlußkörper oder Deckel 18 besteht. Alle diese Bauteile werden mit engen Passungen aus Stahl, insbesondere Edelstahl gefertigt, wobei die beweglichen Teile mit geringem Spiel toleriert sind.

Durch Einschrauben des Deckels 18 in das Gehäuse 12 bis zum Anschlag der Planfläche 19 wird die Scharnierbuchse 16 hinsichtlich Höhe und Achse exakt geführt. Man schraubt den Abdeckanschluß 14 nach dem Aufschieben bis zur Mitte der Bogennut 30 mit dem Bolzen 24 fest, der in das Radial-Gewindeloch 26 der Buchse 16 so tief eingezogen wird, daß zwischen dem Umfang bzw. der Mantelfläche 40 des Gehäuses 12 und der Auskehlung des Abdeckanschlusses 14 ein minimales Bewegungsspiel von z.B. 0,1 mm verbleibt. In die Anschlußgewinde 32 bzw. 33 von Gehäuse 12 und Deckel 18 läßt sich jeweils ein (nicht dargestelltes) Paßstück einschrauben, das in eine Rohr-Rahmenkonstruktion gesteckt und darin eingeschweißt, verklebt oder verschraubt werden kann.

Der Schwenkbereich, welcher durch den Bogenwinkel α bestimmt ist, wird je nach Anforderung mit rundem oder mit quadratischem Nutquerschnitt als Bogennut 30 in den Grundkörper 12 eingefräst bzw. freigedreht. Der Öffnungswinkel wird dadurch begrenzt, daß der Bolzen 24 an dem einen oder anderen Ende der Bogennut 30 anschlägt. Diese verläuft im genannten Beispiel quer zur Achse A des Grundkörpers 12.

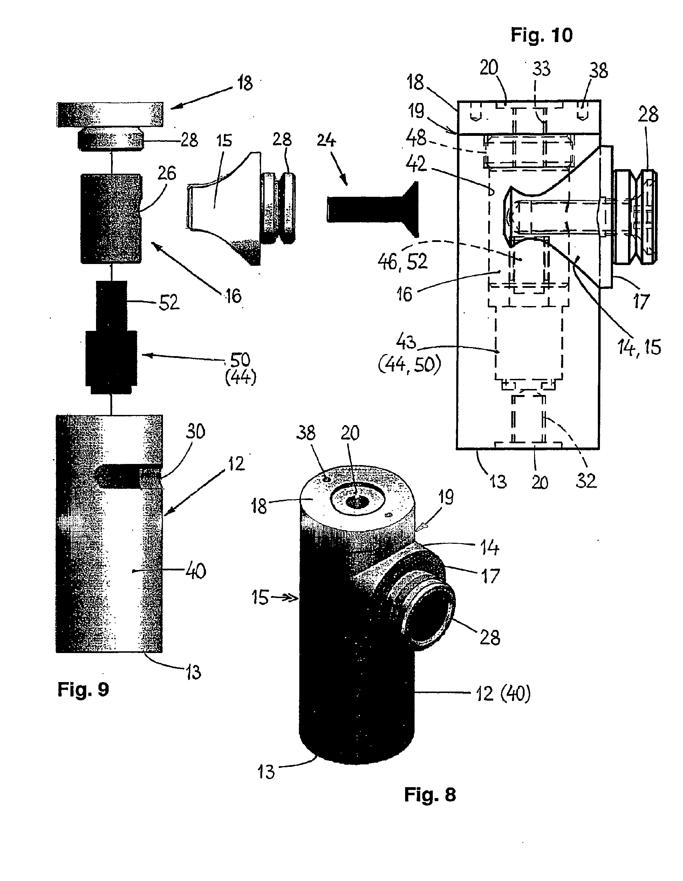

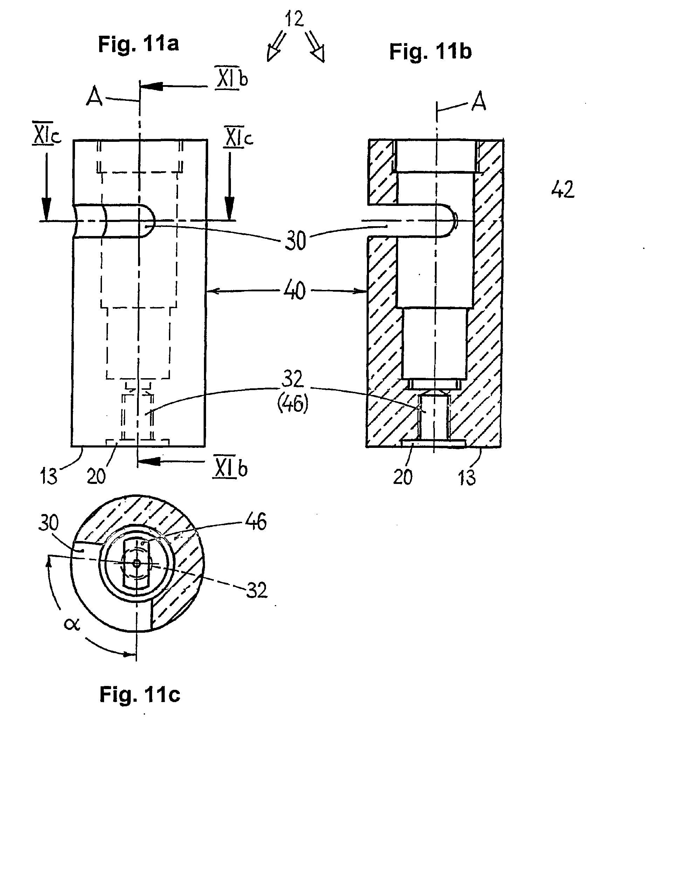

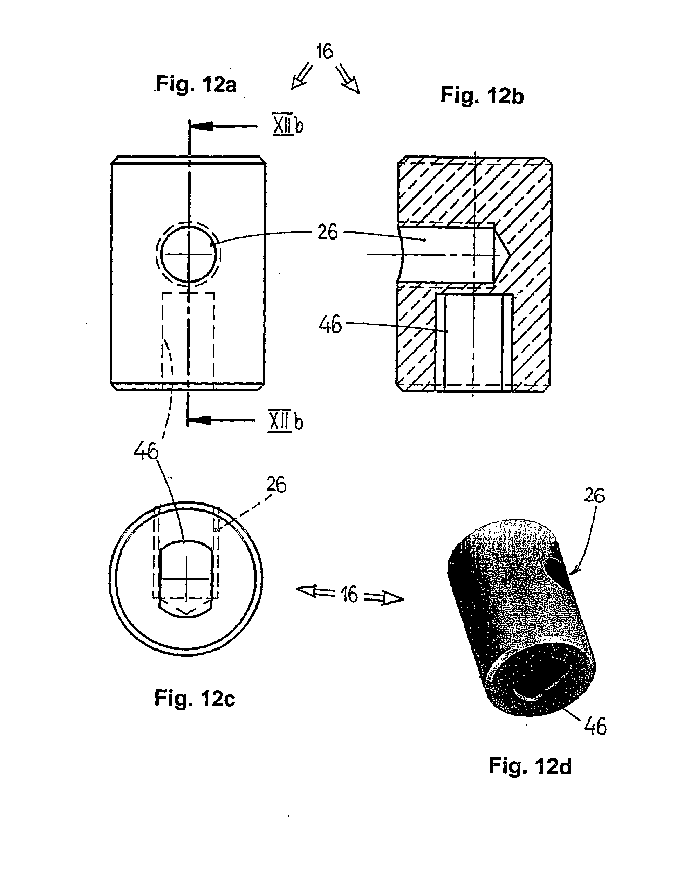

Auch bei der abgewandelten Ausführungsform gemäß Fig. 8 bis Fig. 12d verläuft die Bogennut 30 quer zur Achse A des Gehäuses 12. Dieses ist hierbei etwas länger als oben beschrieben, weil an den Innenzylinder 42 eine ebenfalls zylindrische Ausnehmung 43 anschließt, in der eine Rotationsbremse 50 bzw. eine Dämpfeinheit untergebracht ist, wie in Fig. 9 schematisch gezeigt. Die Bremse 50 hat einen zylindrischen Unterteil und einen oberen Profilfortsatz 52, der in eine gegengleiche Profilaussparung 46 der Buchse 26 paßt (vergl. Fig. 11a bis 11c sowie 12a bis 12d).

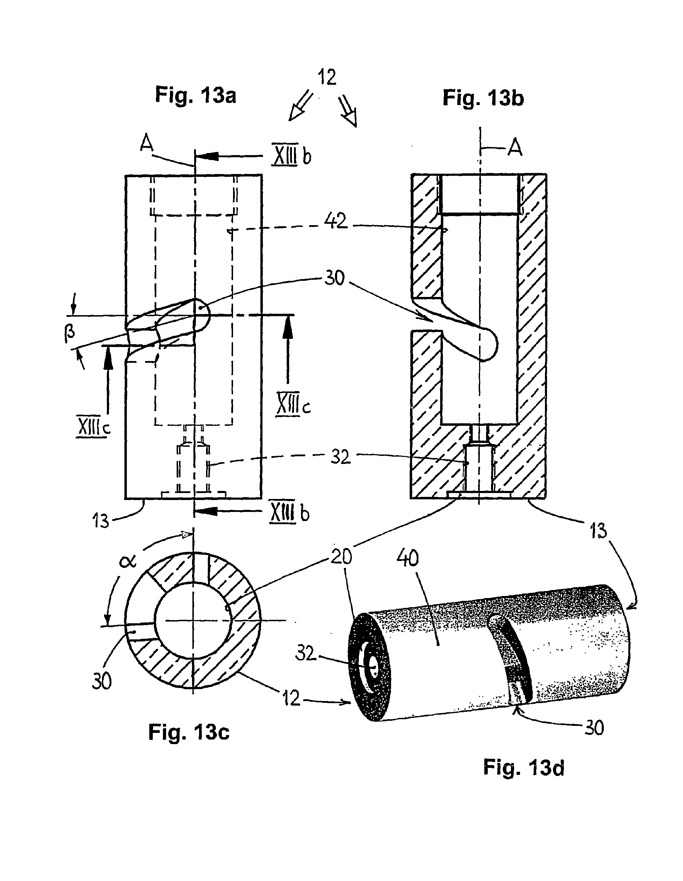

In Fig. 13a bis 13d ist ein Gehäuse bzw. Grundkörper 12 gezeigt, dessen Bogennut 30 schräg oder gekrümmt zur Achse A verläuft. Ein darin geführter Bolzen 24 wird beim Verschwenken aus der tiefsten Stellung, d.h. dem untersten Ende der Nut 30 gleichmäßig angehoben. Entsprechend steigt beim Schwenkvorgang ein mit dem Abdeckanschluß 14 verbundener Bauteil, z.B. ein Türflügel. Der Rücklauf bei der Schließbewegung kann durch eine Dämpfungsfeder 44 und/oder die Rotationsbremse 50 im Scharniergehäuse 12 gedämpft werden, wobei eine einstellbare Auffang-Dämpfung bevorzugt wird.

Die Erfindung ist nicht auf eine der vorbeschriebenen Ausführungsformen beschränkt, sondern in vielfältiger Weise abwandelbar. Man kann an den Rohrverbinder 10 z.B. ein Eck- oder Kniestück anschließen, dessen Bogen sich über einen gewünschten Winkel erstreckt, so daß an den Enden eingefügte Paßeinsätze eine Fortsetzung durch weitere Systemteile ermöglichen, wie das beispielsweise in DE 199 36 126 A1 beschrieben ist. Der erfindungsgemäße Rohrverbinder 10 ist mit dem dort offenbarten System kompatibel.

Zusammenfassend ist festzustellen, daß eine bevorzugte Ausführungsform des neuen Rohrverbinders 10 als Grundkörper ein zylindrisches Gehäuse 12 hat, auf dem ein Abdeckanschluß 14 gleitbeweglich angeordnet ist, wozu ein Gehäuse-Umfangsteil 40 eine Bogennut 30 aufweist. In sie greift ein Bolzen 24 ein, der den Abdeckanschluß 14 am Gehäuse 12 schwenkbar haltert und mit einer Buchse 16 verschraubbar ist, die im Inneren des Gehäuses 12 koaxial dazu gelagert und durch einen axial aufsitzenden Anschlußkörper 18 mit Bewegungsspiel gesichert ist. Der Abdeckanschluß 14 sitzt in Form einer Klammer, eines Sattels o.dgl. bündig-glatt abschließend auf dem Umfang des Gehäuses 12 und hat zumindest einen vom Gehäuse 12 wegführenden Ansatz oder Zapfenbund 28 sowie Ansatzflächen und/oder Einstecköffnungen 38 zum Angriff eines Werkzeugs. Das Gehäuse 12, der Abdeckanschluß 14 und/oder der Anschlußkörper 18 kann an wenigstens einem Ende ein zentrisches Sack- oder Gewindeloch 32, 33 haben. Die Bogennut 30 verläuft entweder quer oder schräg bzw. gekrümmt zur Achse A des Gehäuses 12, in das eine Dämpfungsfeder 44 und/oder eine Bremseinrichtung 50 eingesetzt sein kann.

### Bezugszeichenliste

- α: Bogenwinkel
- β: Neigungswinkel
- A: Achse

- 10: Rohrverbinder
- 12: Grundkörper /Gehäuse
- 13: Bodenfläche
- 14: Abdeckanschluß
- 15: Schenkel
- 16: Buchse
- 17: Deckfläche
- 18: Anschlußkörper / Deckel
- 19: Ringfläche
- 20: Einstich
- 24: (Schraub-) Bolzen
- 25: Bohrung
- 26: Radial-Gewindeloch
- 27: Innensechskant
- 28: Ansatz / Zapfenbund
- 29: Hinterschneidung
- 30: Bogennut
- 32: Gewindeloch
- 33: Gewindeloch
- 38: Einstecköffnungen
- 39: Ansenkung
- 40: Mantelfläche / Umfang
- 42: Innenzylinder
- 43: Ausnehmung
- 44: Dämpfungsfeder
- 46: Pofil-Aussparung
- 48: Paßansatz
- 49: Gewindeloch
- 50: (Rotations-) Bremse
- 52: Profilfortsatz

## Patentansprüche

1. Rohrverbinder (10) mit einem Grundkörper (12), welcher ein zylindrisches Gehäuse (12) ist und an welchem wenigstens ein Anschlußkörper (18) axialfest anbringbar ist, wobei an diesem und/oder an dem Grundkörper (12) zur formschlüssigen Aufnahme eines Paßstücks oder eines Rohrendes jeweils ein Einstich (20) oder ein Zapfen (28) vorhanden ist, **dadurch gekennzeichnet, daß** auf dem Gehäuse (12) ein Abdeckanschluß (14) umfangsseitig gleitbeweglich angeordnet ist.

2. Rohrverbinder nach Anspruch 1, **dadurch gekennzeichnet, daß** das Gehäuse (12) an einem Teil seines Umfangs (40) eine Bogennut (30) aufweist, in die ein Bolzen (24) eingreift, der den Abdeckanschluß (14) am Gehäuse (12) schwenkbar haltert.

3. Rohrverbinder nach Anspruch 2, **dadurch gekennzeichnet, daß** der Bolzen (24) mit einer Buchse (16) verbindbar ist, die im Inneren des Gehäuses (12) koaxial dazu insbesondere schwimmend gelagert oder in einen Innenzylinder (40) des Gehäuses (12) eingepaßt ist.

4. Rohrverbinder nach Anspruch 3, **dadurch gekennzeichnet, daß** die Buchse (16) zur Aufnahme eines Schraubendes des Bolzens (24) ein Radialgewindeloch (26) hat.

5. Rohrverbinder nach Anspruch 3 oder 4, **dadurch gekennzeichnet, daß** die Buchse (16) im Gehäuse (12) durch den axial aufsitzenden Anschlußkörper (18) mit Bewegungsspiel gesichert ist.

6. Rohrverbinder nach einem der Ansprüche 1 bis 5, **dadurch gekennzeichnet, daß** der Abdeckanschluß (14) in Form einer Klammer oder eines Sattels auf dem Umfang (40) des Gehäuses (12) sitzt.

7. Rohrverbinder nach Anspruch 6, **dadurch gekennzeichnet, daß** der Abdeckanschluß (14) mit dem Gehäuse (12) bündig-glatt abschließt.

8. Rohrverbinder nach einem der Ansprüche 1 bis 7, **dadurch gekennzeichnet, daß** zumindest der Abdeckanschluß (14) einen vom Gehäuse (12) wegführenden Ansatz oder Zapfenbund (28) zur Aufnahme eines Paßstücks oder Rohrendes aufweist.

9. Rohrverbinder nach einem der Ansprüche 1 bis 8, **dadurch gekennzeichnet, daß** der Abdeckanschluß (14) und/oder der Anschlußkörper (18) ein zentrisches Sack- oder Gewindeloch (33) zur Befestigung eines weiteren Bauteils hat.

10. Rohrverbinder nach einem der Ansprüche 1 bis 9, **dadurch gekennzeichnet, daß** der Anschlußkörper (18) Ansatzflächen und/oder Einstecköffnungen (38) zum Angriff eines Werkzeugs hat.

11. Rohrverbinder nach einem der Ansprüche 1 bis 10, **dadurch gekennzeichnet, daß** das Gehäuse (12) an wenigstens einem Ende ein zentrisches Gewindeloch (32) zur Aufnahme einer Schraube aufweist.

12. Rohrverbinder nach einem der Ansprüche 2 bis 4, **dadurch gekennzeichnet, daß** die Bogennut (30) quer zur Achse (A) des Gehäuses (12) verläuft.

13. Rohrverbinder nach einem der Ansprüche 2 bis 4, **dadurch gekennzeichnet, daß** die Bogennut (30) schräg zur Achse (A) des Gehäuses (12) verläuft.

14. Rohrverbinder nach einem der Ansprüche 1 bis 13, **dadurch gekennzeichnet, daß** in das Gehäuse (12) eine Dämpfungsfeder (44) und/oder eine Bremseinrichtung (50) eingesetzt ist.

15. Rohrverbinder nach den Ansprüchen 3 und 14, **dadurch gekennzeichnet, daß** die Bremseinrichtung (50) ein Formteil (52) aufweist, das in eine gegengleich profilierte Aussparung (46) der Buchse (16) greift.

## Claims

1. Pipe joint (10) with a base body (12) being a cylindrical case (12) and to which at least one connecting body (18) can be fixed axially firm with this same and/or the base body (12) being equipped respectively with a recess (20) or a pivot (28) for form-fit reception of an attachment or pipe end, **characterized by** a covering connection (14) being provided on the circumferential side of the case (12) and being displaceable by sliding.

2. Pipe joint according to claim 1, **characterized by** the case (12) showing at a part of its circumference (40) a curved channel (30) into which engages a pin (24) fixing the covering connection in a manner allowing to hinge (14) to the case (12).

3. Pipe joint according to claim 2, **characterized by** the pin (24) being connectable to a bush (16) kept in the interior of the case (12) coaxially to the same and particularly floating, or being fitted in an interior cylinder (40) of the case (12).

4. Pipe joint according to claim 3, **characterized by** the bush (16) having a radial threaded hole (26) to receive (24) a threaded end of the pin.

5. Pipe joint according to claims 3 or 4, **characterized by** the bush (16) in the case (12) being locked with clearance by connecting body (18) placed upon in axial direction.

6. Pipe joint according to one of the claims 1 to 5, **characterized by** the covering connection (14) being placed upon the circumference (40) of the case (12) in the form of a clamp or a bracket.

7. Pipe joint according to claim 6, **characterized by** the covering connection (14) being in flush connection to the case (12).

8. Pipe joint according to one of the claims 1 to 7, **characterized by** at least the covering connection (14) providing for a shoulder or a pivot collar (28) leading away from the case (12) and providing for receiving a fitting part or a pipe end.

9. Pipe joint according to one of the claims 1 to 9, **characterized by** the covering connection (14) and/or the connector body having a centric blind or threaded hole (33) to fix a supplementary building component.

10. Pipe joint according to one of the claims 1 to 8, **characterized by** the connector body (18) having adapter surfaces and/or plug-in openings (38) to receive a tool.

11. Pipe joint according to one of the claims 1 to 10, **characterized by** the case (12) having at one end at least a centric threaded hole (32) to receive a screw.

12. Pipe joint according to one of the claims 2 to 4, **characterized by** the curved channel (30) running transversally to the axis (A) of the case (12).

13. Pipe joint according to one of the claims 2 to 4, **characterized by** the curved channel (30) running inclined to the axis (A) of the case (12).

14. Pipe joint according to one of the claims 1 to 13, **characterized by** an absorbing spring (44) and/or a brake device (50) being lodged in the case (12).

15. Pipe joint according to the claims 3 and 14, **characterized by** the brake device (50) providing for a structural part (52) engaging into a recess of diametrically opposed profile (46) of the bush (16).

## Revendications

1. Manchon de raccordement de tuyau (10) comprenant un corps de base (12) qui est un carter cylindrique (12) et sur lequel au moins un corps de raccordement (18) peut être installé de manière axiale fixe, une encoche (20) ou un tenon (28) étant respectivement présent sur ce corps de raccordement et/ou sur le corps de base (12) pour le logement par adhérence de forme d'un adaptateur ou d'un bout de tuyau, **caractérisé en ce qu'**un raccord de recouvrement (14) est disposé sur le carter (12) du côté circonférentiel de manière déplaçable par glissement.

2. Manchon de raccordement de tuyau selon la revendication 1, **caractérisé en ce que** le carter (12), sur une partie de sa circonférence (40), présente une rainure échancrée (30), dans laquelle a prise un boulon (24) qui maintient le raccord de recouvrement (14) de manière pivotante sur le carter (12).

3. Manchon de raccordement de tuyau selon la revendication 2, **caractérisé en ce que** le boulon (24) est raccordable à une douille (16) qui est logée à l'intérieur du carter (12) en lui étant coaxiale, notamment de manière flottante, ou est ajustée dans un cylindre intérieur (40) du carter (12).

4. Manchon de raccordement de tuyau selon la revendication 3, **caractérisé en ce que** la douille (16) a un trou à filetage radial (28) destiné à loger un bout fileté du boulon (24).

5. Manchon de raccordement de tuyau selon l'une quelconque des revendications 3 ou 4, **caractérisé en ce que** la douille (16) est bloquée dans le carter (12) avec jeu par le corps de raccordement (18) posé par dessus en direction axiale.

6. Manchon de raccordement de tuyau selon l'une quelconque des revendications 1 à 5, **caractérisé en ce que** le raccord de recouvrement (14) est posé sur la circonférence (40) du carter (12) sous forme d'une agrafe ou d'un étrier.

7. Manchon de raccordement de tuyau selon la revendication 6, **caractérisé en ce que** le raccord de recouvrement (14) se raccorde au carter (12) de manière affleurée.

8. Manchon de raccordement de tuyau selon l'une quelconque des revendications 1 à 7, **caractérisé en ce qu'**au moins le raccord de recouvrement (14) présente une saillie ou un collet à tenon (28) s'éloignant du carter (12), destiné à loger un adaptateur ou un bout de tuyau.

9. Manchon de raccordement de tuyau selon l'une quelconque des revendications 1 à 8, **caractérisé en ce que** le raccord de recouvrement (14) et/ou le corps de raccordement (18) ont un trou borgne ou un trou taraudé (33) centrique destiné à fixer une pièce supplémentaire.

10. Manchon de raccordement de tuyau selon l'une quelconque des revendications 1 à 9, **caractérisé en ce que** le corps de raccordement (18) a des surfaces de prise et/ou des ouvertures d'enfoncement (38) pour la prise d'un outil.

11. Manchon de raccordement de tuyau selon l'une quelconque des revendications 1 à 10, **caractérisé en ce que** le carter (12), sur au moins une extrémité, présente un trou taraudé centrique (32) destiné à loger une vis.

12. Manchon de raccordement de tuyau selon l'une quelconque des revendications 2 à 4, **caractérisé en ce que** la rainure échancrée (30) s'étend de manière transversale par rapport à l'axe (A) du carter (12).

13. Manchon de raccordement de tuyau selon l'une quelconque des revendications 2 à 4, **caractérisé en ce que** la rainure échancrée (30) s'étend de manière inclinée par rapport à l'axe (A) du carter (12).

14. Manchon de raccordement de tuyau selon l'une quelconque des revendications 1 à 13, **caractérisé en ce qu'**un ressort amortisseur (44) et/ou un dispositif de freinage (50) sont insérés dans le carter (12).

15. Manchon de raccordement de tuyau selon les revendications 3 et 14, **caractérisé en ce que** le dispositif de freinage (50) présente une pièce formée (52) ayant prise dans un évidement (46) de la douille (16), profilé de manière diamétralement opposée.
